# EUROPEAN PATENT APPLICATION

(11) **EP 3 647 907 A1**
(43) Date of publication of application: **06.05.2020**
(21) Application number: 17915397.8
(22) Date of filing: 12.12.2017
(51) Int. Cl.: G06F 3/01, H04N 5/232, G06K 9/00

(54) **USER SIGNAL PROCESSING METHOD AND DEVICE FOR PERFORMING METHOD**

(30) Priority: 29.06.2017 KR 20170082448
(71) Applicant: Linkflow Co. Ltd, Gangnam-gu, Seoul 06160 (KR)
(72) Inventor: KIM, Yong Kuk, Suwon-si Gyeonggi-do 16534 (KR); KIM, Jun Se, Gwangju-Si Gyeonggi-do 12772 (KR); CHO, Sung Rae, Gangnam-Gu Seoul 06262 (KR); KIM, Yong Jin, Nam-gu Busan 48515 (KR)
(74) Representative: AWA Sweden AB
(86) International application number: PCT/KR2017/014515
(87) International publication number: WO 2019/004531

(57) **Abstract**

The present invention relates to a user signal processing method and a device for performing the method. A user signal processing method can comprise the steps of: an image processing device recognizing a user signal among a plurality of defined user signals; and the image processing device controlling an omnidirectional image processing device in accordance with a control signal corresponding to the signal, wherein each of the plurality of user signals can correspond to each of plurality of different hand images.

## Description

### CROSS-REFERENCE TO RELATED APPLICATION

This application claims priority to and the benefit of Korean Patent Application No. 2017-0082448, filed on 29, June, 2017, the disclosure of which is incorporated herein by reference in its entirety.

### BACKGROUND

### 1. Field of the Invention

The present invention relates to a method and apparatus for processing a user signal, and more particularly, to a method and apparatus for more conveniently controlling an image processing apparatus by recognizing a user signal and performing an operation corresponding to the user signal.

### 2. Discussion of Related Art

An omnidirectional imaging system is an imaging system capable of recording image information of all directions (360 degrees) from a particular point. Since the omnidirectional imaging system can provide very wide field-of-view images, as compared to an existing imaging system, the range of applications of the omnidirectional imaging system has increasingly been broadened not only to research fields such as the fields of computer vision and mobile robots, but also to practical fields such as the fields of surveillance systems, virtual reality systems, and pan-tilt-zoom (PTZ) cameras, and video conferencing.

Various methods can be used to obtain an omnidirectional image. For example, images may be obtained by rotating one camera with respect to an optical axis that satisfies a single view point, and an omnidirectional image may be generated by combining the images. In another example, a method may be used in which a plurality of cameras are arranged into an annular structure and images obtained by the plurality of cameras are combined. A user may generate an omnidirectional image using various omnidirectional image processing apparatuses (or omnidirectional image processing cameras, 360 degrees cameras) for obtaining an omnidirectional image.

There is a need for a method for conveniently capturing an omnidirectional image by more quickly controlling an omnidirectional image processing apparatus when the omnidirectional image is captured based on the omnidirectional image processing apparatus.

### SUMMARY OF THE INVENTION

The present invention is directed to solving the problems described above.

Also, the present invention is directed to providing a user signal to an image processing apparatus and more conveniently controlling the image processing apparatus according to the user signal.

Also, the present invention is directed to checking a captured omnidirectional image through a user device in real time and conveniently controlling the capturing of the omnidirectional image.

Representative configurations of the present invention for achieving the objectives are as follows.

One aspect of the present invention provides a method of processing a user signal, which is performed by an image processing device, the method comprising recognizing a user signal among a plurality of defined user signals and controlling an omnidirectional image processing apparatus according to a control signal corresponding to the user signal, wherein each of the plurality of user signals correspond to a corresponding one of a plurality of different hand images.

Another aspect of the present invention provides an image processing apparatus for processing a user signal, the image processing apparatus comprising a communication unit configured to communicate with an external device and a processor operatively connected to the communication unit, wherein the processor is implemented to recognize a user signal among a plurality of defined user signals and control an omnidirectional image processing apparatus according to a control signal corresponding to the user signal, and each of the plurality of user signals correspond to a corresponding one of a plurality of different hand images.

According to the present invention, a user signal can be provided to an image processing apparatus and the image processing apparatus can be more conveniently controlled according to the user signal.

Also, according to the present invention, a captured omnidirectional image can be checked through a user device in real time and capturing of the omnidirectional image can be conveniently controlled.

### BRIEF DESCRIPTION OF THE DRAWINGS

FIG. 1 is a schematic view illustrating an omnidirectional image processing apparatus according to an exemplary embodiment of the present inventive concept.
FIG. 2 is a schematic view showing the characteristics of a plurality of image capturing units provided in the omnidirectional image processing apparatus according to an exemplary embodiment of the present inventive concept.
FIG. 3 is a schematic view illustrating image capturing lines of a plurality of image capturing units according to an exemplary embodiment of the present inventive concept.
FIG. 4 is a schematic view illustrating image capturing lines of a plurality of image capturing units according to an exemplary embodiment of the present inventive concept.
FIG. 5 is a conceptual view showing an imaging method according to an embodiment of the present invention.
FIG. 6 is a conceptual view showing an imaging method according to an embodiment of the present invention.
FIG. 7 is a conceptual view showing an imaging method according to an embodiment of the present invention.
FIG. 8 is a conceptual view showing an imaging method according to an embodiment of the present invention.
FIG. 9 is a conceptual view showing a method for checking an omnidirectional image according to an embodiment of the present invention.
FIG. 10 is a conceptual view showing control of the omnidirectional image processing apparatus based on a user device according to an embodiment of the present invention.

### DETAILED DESCRIPTION OF EXEMPLARY EMBODIMENTS

In the following detailed description of the present inventive concept, references are made to the accompanying drawings that show, by way of illustration, specific embodiments in which the present inventive concept may be practiced. These embodiments are described in sufficient detail to enable those skilled in the art to practice the present inventive concept. It is to be understood that the various embodiments of the present inventive concept, although different from each other, are not necessarily mutually exclusive. For example, specific shapes, structures and characteristics described herein may be implemented as modified from one embodiment to another without departing from the spirit and scope of the present inventive concept. Furthermore, it shall be understood that the locations or arrangements of individual components within each embodiment may also be modified without departing from the spirit and scope of the present inventive concept. Therefore, the following detailed description is not to be taken in a limiting sense, and the scope of the present inventive concept is to be taken as encompassing the scope of the appended claims and all equivalents thereof. In the drawings, like reference numerals refer to the same or similar elements throughout the several views.

Hereinafter, preferred embodiments of the present inventive concept will be described in detail with reference to the accompanying drawings to enable those skilled in the art to easily implement the present inventive concept.

Hereinafter, an image processing apparatus according to an embodiment of the present invention may include an omnidirectional image processing apparatus. The omnidirectional image processing apparatus may include an omnidirectional camera (a 360-degree camera) capable of capturing an omnidirectional image (or a 360-degree image).

Also, image information and video information to be disclosed below in an embodiment of the present invention may include an omnidirectional image (or a 360-degree image).

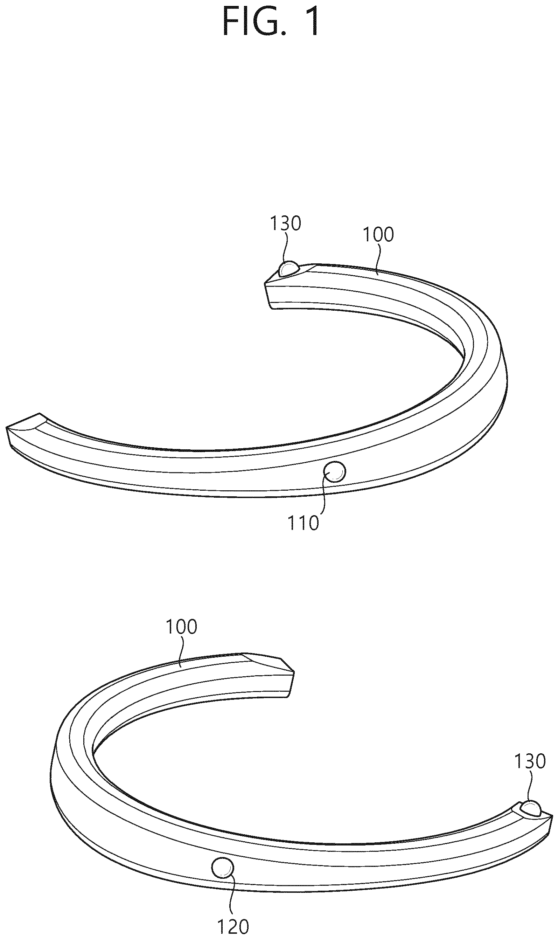

FIG. 1 is a schematic view illustrating an omnidirectional image processing apparatus according to an exemplary embodiment of the present inventive concept.

The structure of the omnidirectional image processing apparatus according to an exemplary embodiment of the present inventive concept is as illustrated in FIG. 1.

Referring to FIG. 1, an omnidirectional image processing apparatus 100 may have a wearable structure and may have a necklace-like shape that can be worn around the neck of a user. The omnidirectional image processing apparatus 100 may be in the shape of an open necklace that is open on one side thereof, as illustrated in FIG. 1, or in the shape of a non-open necklace. In the description that follows, it is assumed that the omnidirectional image processing apparatus 100 has a U shape that is open on one side thereof. The omnidirectional image processing apparatus 100, which is U-shaped, may be worn around the neck of the user as a wearable device and may be able to capture an omnidirectional image.

For convenience, it is assumed that the omnidirectional image processing apparatus 100 is worn around the neck of the user in the shape of a necklace (or in the shape of an open necklace that is open on one side thereof or in a U shape). However, the omnidirectional image processing apparatus 100 may not necessarily be worn around the neck of the user. For example, the omnidirectional image processing apparatus 100 may acquire an omnidirectional image by being hung on/attached to other parts of the body of the user or an external object.

The user can wear the omnidirectional image processing apparatus 100 around his or her neck and can thus acquire a plurality of images for generating an omnidirectional image with both hands free.

The omnidirectional image processing apparatus 100 may include a plurality of image capturing units. The plurality of image capturing units may be provided in the omnidirectional image processing apparatus 100 to be a particular distance (or a predetermined distance) apart from one another and may independently capture images in accordance with a predetermined field of view/image capturing line. The locations of the plurality of image capturing units may be fixed in the omnidirectional image processing apparatus 100, or the plurality of image capturing units may be movable so that their locations may vary.

For example, the omnidirectional image processing apparatus 100 may include three image capturing units, and the three image capturing units may capture an omnidirectional image with a predetermined field of view (e.g., 120 degrees to 180 degrees). The three image capturing units may be first, second, and third image capturing units 110, 120, and 130.

For convenience, an omnidirectional image processing apparatus 100 including three image capturing units will be described below. However, the omnidirectional image processing apparatus 100 may be modified to include a plurality of image capturing units other than three (e.g., two, four, five, or six image capturing units) to capture an omnidirectional image, without departing from the spirit and scope of the present inventive concept.

The first, second, and third image capturing units 110, 120, and 130 may capture an image in accordance with a predetermined field of view. At given time resources, a first image may be generated by the first image capturing unit 110, a second image may be generated by the second image capturing unit 120, and a third image may be generated by the third image capturing unit 130. The first, second, and third image capturing units 110, 120, and 130 may have a field of view of 120 degrees or greater, and there may exist overlapping areas between the first, second, and third images. Thereafter, an omnidirectional image may be generated by stitching together and/or correcting the first, second, and third images, which are captured at the given time resources by the omnidirectional image processing apparatus 100. The stitching and/or the correcting of a plurality of images may be performed by the omnidirectional image processing apparatus or may be performed by a user device (such as a smartphone) that can communicate with the omnidirectional image processing apparatus 100. That is, additional image processing for a plurality of images generated may be performed by the omnidirectional image processing apparatus 100 and/or another image processing apparatus (such as a smartphone, a personal computer (PC), or the like).

The characteristics of the omnidirectional image processing apparatus and an omnidirectional image generation method will hereinafter be described.

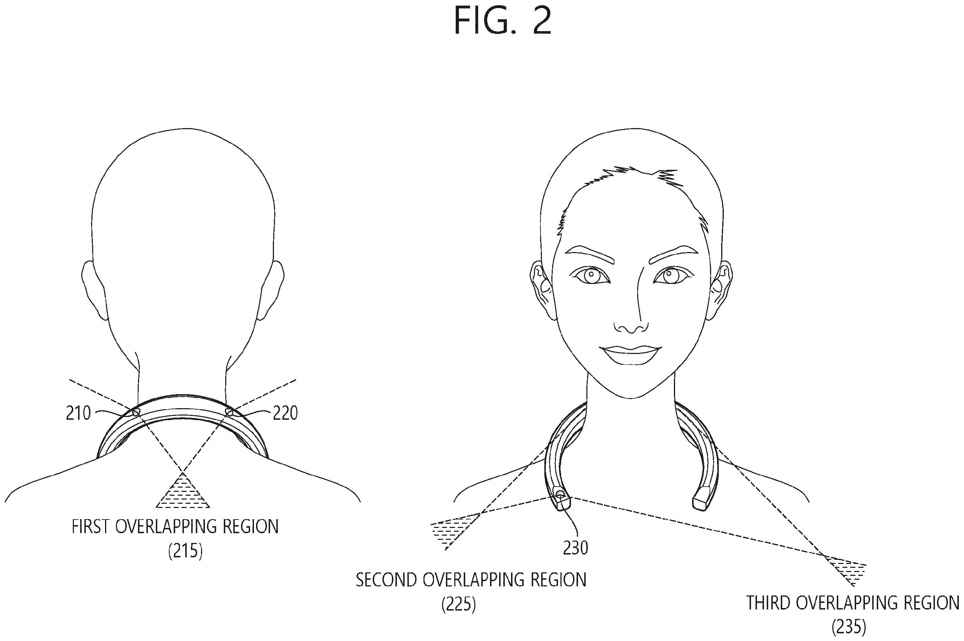

FIG. 2 is a schematic view showing the characteristics of a plurality of image capturing units provided in the omnidirectional image processing apparatus according to an exemplary embodiment of the present inventive concept.

FIG. 2 shows the characteristics of a plurality of image capturing units provided in a U-shaped omnidirectional image processing apparatus. The locations of the plurality of image capturing units illustrated in FIG. 2 are merely exemplary. The plurality of image capturing units may be disposed at various locations in the omnidirectional image processing apparatus to capture a plurality of images for generating an omnidirectional image.

The rear of the omnidirectional image processing apparatus is as illustrated in the upper part of FIG. 2.

First and second image capturing units 210 and 220, which are included in the omnidirectional image processing apparatus, may be located at a curved part of the omnidirectional image processing apparatus where curvature is present. Specifically, when a user wears the omnidirectional image processing apparatus around his or her neck as a wearable device, the first and second image capturing units 210 and 220 may be provided at the curved part of the omnidirectional image processing apparatus that is in contact with the back of the neck of the user. For example, the first and second image capturing units 210 and 220 may be a predetermined distance apart from a point on the U-shaped omnidirectional image processing apparatus with a maximum curvature (e.g., the middle part of the U-shaped omnidirectional image processing apparatus).

The first image capturing unit 210 may capture an image of a region including a rear left blind spot with respect to the user's line of sight. The second image capturing unit 220 may capture an image of a region including a rear right blind spot with respect to the user's line of sight. Specifically, the first image capturing unit 210 may have a first field of view and may capture an image of a region corresponding to the first field of view. The second image capturing unit 220 may have a second field of view and may capture an image of a region corresponding to the second field of view. For example, the first and second fields of view may be 120 degrees to 180 degrees.

When image capturing is performed by the first and second image capturing units 210 and 220, a first overlapping area 215, which is the overlapping area of the first and second fields of view, may be generated. Thereafter, an omnidirectional image may be generated through image stitching in consideration of the overlapping area.

The front of the omnidirectional image processing apparatus is as illustrated in the lower part of FIG. 2.

A third image capturing unit 230 may be disposed at the front of the omnidirectional image processing apparatus. Specifically, the third image capturing unit 230 may be disposed at an end portion of the omnidirectional image processing apparatus (i.e., at an end portion of the U-shaped omnidirectional image processing apparatus). When a user wears the omnidirectional image processing apparatus around his or her neck as a wearable device, the end portion of the U-shaped omnidirectional image processing apparatus may face forward (i.e., toward the direction of the user's line of sight). The omnidirectional image processing apparatus includes first and second end portions, and the third image capturing unit 230 may be disposed at one of the first and second end portions.

The third image capturing unit 230 may perform image capturing in the same direction as the user's line of sight to capture an image of a region corresponding to the user's line of sight.

Specifically, the third image capturing unit 230 may have a third field of view and may capture an image of a region corresponding to the third field of view. For example, the third field of view may be 120 degrees to 180 degrees. When image capturing is performed by the third image capturing unit 230, a second overlapping area 225, which is the overlapping area of the first field of view of the first image capturing unit 210 and the third field of view of the third image capturing unit 230, may be generated. Also, when image capturing is performed by the third image capturing unit 230, a third overlapping area 235, which is the overlapping area of the second field of view of the second image capturing unit 220 and the third field of view of the third image capturing unit 230, may be generated.

Due to the structural characteristics of the omnidirectional image processing apparatus as a wearable device that can be worn around the neck of a user, the first and second image capturing units 210 and 220 may be positioned higher than the third image capturing unit 230 on the basis of the ground. Also, the third image capturing unit 230 may be disposed at only one end portion of the omnidirectional image processing apparatus.

In an existing omnidirectional image processing apparatus, a plurality of image capturing units may be configured to be disposed at the same height and a predetermined angle, but in the omnidirectional image processing apparatus according to an exemplary embodiment of the present inventive concept, a plurality of image capturing units may be configured to have different angles with respect to each other and to be disposed at different heights. Thus, the first, second, and third overlapping areas 215, 225, and 235, which are generated by a plurality of images captured by the plurality of image capturing units of the omnidirectional image processing apparatus according to an exemplary embodiment of the present inventive concept, may have different sizes and/or different shapes.

Thereafter, an omnidirectional image may be generated by performing image processing (such as image stitching/correction) on the first, second, and third images each generated by the first, second, and third image capturing units 210, 220, and 230 in consideration of the first, second, and third overlapping areas 215, 225, and 235.

The first, second, and third fields of view may be set to be the same, or to differ from one another, without departing from the spirit and scope of the present inventive concept.

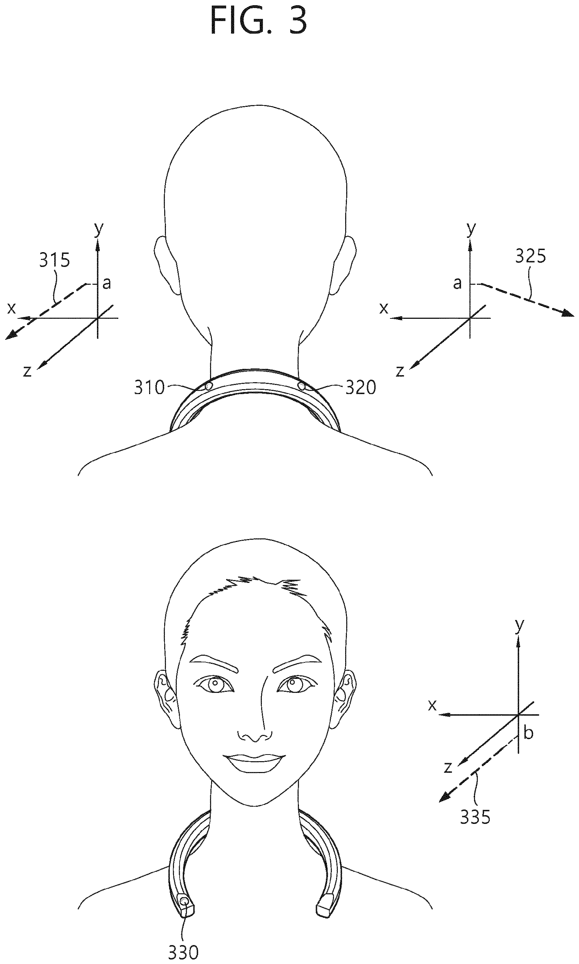

FIG. 3 is a schematic view illustrating image capturing lines of a plurality of image capturing units according to an exemplary embodiment of the present inventive concept.

FIG. 3 illustrates image capturing lines of a plurality of image capturing units installed in an omnidirectional image processing apparatus according to an exemplary embodiment of the present inventive concept. Assuming that the ground is parallel to the X-Z plane formed by the X axis and the Z axis, the plurality of image capturing lines may be defined as lines vertically penetrating the centers of the lenses of the plurality of image capturing units included in the omnidirectional image processing apparatus according to an exemplary embodiment of the present inventive concept in a space defined by the X axis, the Y axis, and the Z axis.

In an existing omnidirectional image processing apparatus, a plurality of image capturing units may be implemented at the same height at a predetermined angle (for example, 120 degrees). In this case, a plurality of image capturing lines of the plurality of image capturing units included in the existing omnidirectional image processing apparatus may be a plurality of lines extending in parallel to the ground (or the X-Z plane) and having a predetermined angle (for example, 120 degrees) with respect to one another.

As already described above, in the omnidirectional image processing apparatus according to an exemplary embodiment of the present inventive concept, the plurality of image capturing units may have different heights (or locations) and different angles with respect to one another (or the image capturing lines of the plurality of image capturing units have different angles with respect to one another) during image capturing. Thus, the properties of the image capturing lines of the omnidirectional image processing apparatus according to an exemplary embodiment of the present inventive concept differ from the properties of the image capturing lines of the existing omnidirectional image processing apparatus.

The image capturing lines of the plurality of image capturing units, illustrated in FIG. 3, are exemplary for showing differences in properties (for example, in height and angle) between the image capturing lines of the plurality of image capturing units, resulting from the characteristics of a wearable device. Also, the image capturing lines of FIG. 3 may be image capturing lines when a user who wears the omnidirectional image processing apparatus according to an exemplary embodiment of the present inventive concept does not move or the omnidirectional image processing apparatus according to an exemplary embodiment of the present inventive concept is fixed in a particular state.

The upper part of FIG. 3 illustrates image capturing lines of first and second image capturing units 310 and 320.

The first and second image capturing units 310 and 320 may be positioned relatively higher than a third image capturing unit 330. Assuming that a user who wears the omnidirectional image capturing apparatus around is standing in a Y-axis direction, due to the structural characteristics of a wearable device that can be worn on the neck, a part of the omnidirectional image capturing apparatus with curvature (i.e., a curved/central part of a U shape) where the first and second image capturing units 310 and 320 are disposed may be relatively raised, and a leg part of the omnidirectional image capturing apparatus (i.e., an end part of the U shape) where the third image capturing unit 330 is disposed may be relatively dropped.

For example, a first image capturing line 315 of the first image capturing line 310 may be parallel to the X-Z plane and may have a first angle, a second angle, and a third angle with respect to the X axis, the Y axis, and the Z axis, respectively, at a point "a" on the Y axis.

A second image capturing line 325 of the second image capturing unit 320 may be parallel to the X-Z plane and may have a fourth angle, a fifth angle, and a sixth angle with respect to the X axis, the Y axis, and the Z axis, respectively, at the point "a" on the Y axis.

Referring to the lower part of FIG. 3, a third image capturing line 335 of the third image capturing unit 330 may be parallel to the X-Z plane and may have a seventh angle, an eighth angle, and a ninth angle with respect to the X axis, the Y axis, and the Z axis, respectively, at a point "b" on the Y axis. Here, b may be a smaller value than a. The third image capturing line 335 of the third image capturing unit 330 may be parallel to the X-Z plane and may face forward like the user's line of sight (for example, toward a direction perpendicular to the X-Y plane).

That is, the first and second image capturing lines 315 and 325 may have the same height with respect to the Y axis, and the third image capturing line 335 may be positioned relatively lower than the first and second image capturing lines with respect to the Y axis. The first, second, and third image capturing lines 315, 325, and 335 illustrated in FIG. 3 are exemplary image capturing lines having different properties, and various image capturing lines other than those set forth herein can be defined to capture an omnidirectional image.

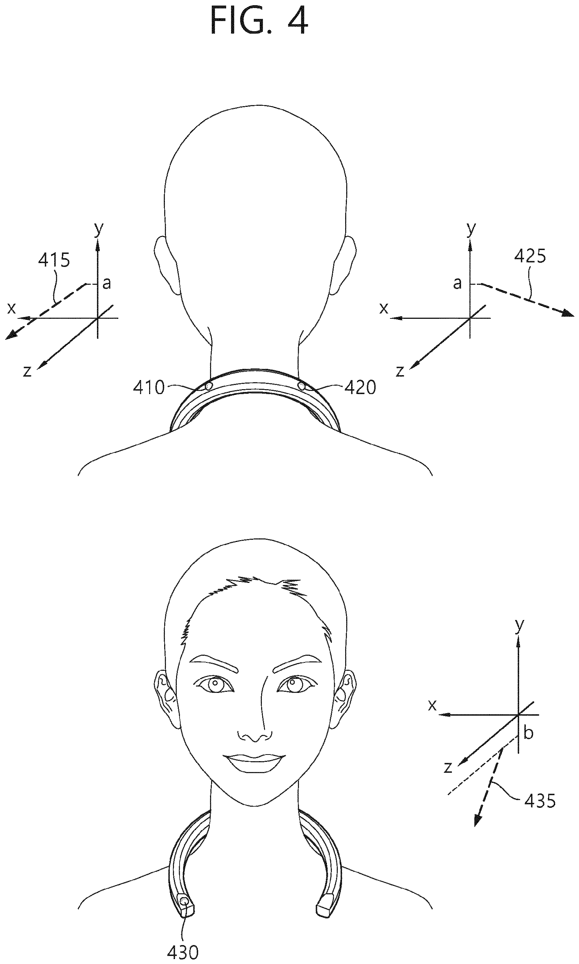

FIG. 4 is a schematic view illustrating image capturing lines of a plurality of image capturing units according to an exemplary embodiment of the present inventive concept.

FIG. 4 illustrates image capturing lines of a plurality of image capturing units, which are different from those of FIG. 3. It is assumed that the ground is parallel to the X-Z plane formed by the X axis and the Z axis.

The upper part of FIG. 4 illustrates image capturing lines of first and second image capturing units 410 and 420.

The first and second image capturing units 410 and 420 may be positioned relatively higher than a third image capturing unit 430. Assuming that a user is standing in a Y- axis direction, due to the structural characteristics of a wearable device that can be worn around the neck, image capturing may be performed in a state in which a part of the omnidirectional image capturing apparatus with curvature (i.e., a curved part of a U shape) where the first and second image capturing units 410 and 420 are disposed is relatively raised and a leg part of the omnidirectional image capturing apparatus (i.e., an end part of the U shape) where the third image capturing unit 430 is disposed is relatively dropped.

For example, a first image capturing line 415 of the first image capturing line 410 may be parallel to the X-Z plane and may have a first angle, a second angle, and a third angle with respect to the X axis, the Y axis, and the Z axis, respectively, at a point "a" on the Y axis.

A second image capturing line 415 of the second image capturing unit 420 may be parallel to the X-Z plane and may have a fourth angle, a fifth angle, and a sixth angle with respect to the X axis, the Y axis, and the Z axis at the point "a" on the Y axis.

The lower part of FIG. 4 illustrates an image capturing line of the third image capturing unit 430.

A third image capturing line 435 of the third image capturing unit 430 may be parallel to the X-Z plane and may have a seventh angle, an eighth angle, and a ninth angle with respect to the X axis, the Y axis, and the Z axis, respectively, at a point "b" on the Y axis.

Since the third image capturing unit 430 is disposed at an end portion of the omnidirectional image processing apparatus, the third image capturing line may not be parallel to the X-Z plane and may have a predetermined angle (for example, 0 to 30 degrees) with respect to the X-Z plane.

That is, the first and second image capturing lines 415 and 425 may have the same height with respect to the Y axis, and the third image capturing line 435 may be positioned relatively lower than the first and second image capturing lines 415 and 425 with respect to the Y axis. Also, the first and second image capturing lines 415 and 425 may be parallel to the X-Z plane, but the third image capturing line 435 may not be parallel to the X-Z plane.

In another exemplary embodiment of the present inventive concept, the first image capturing line of the first image capturing unit may form a first' angle with respect to the X-Z plane and may have a first angle, a second angle, and a third angle with respect to the X axis, the Y axis, and the Z axis, respectively, starting from the point "a" on the Y axis. Also, the second image capturing line of the second image capturing unit may form the first' angle with respect to the X-Z plane and may have a fourth angle, a fifth angle, and a sixth angle with respect to the X axis, the Y axis, and the Z axis, respectively, starting from the point "a" on the Y axis. The third image capturing line of the third image capturing unit may form a second' angle with respect to the X-Z plane and may have a seventh angle, an eighth angle, and a ninth angle with respect to the X axis, the Y axis, and the Z axis, respectively, starting from a point "b" on the Y axis.

In yet another exemplary embodiment of the present inventive concept, the first image capturing line of the first image capturing unit may form angle 1' with respect to the X-Z plane and may have a first angle, a second angle, and a third angle with respect to the X axis, the Y axis, and the Z axis, respectively, starting from the point "a" on the Y axis. Also, the second image capturing line of the second image capturing unit may form a second' angle with respect to the X-Z plane and may have a fourth angle, a fifth angle, and a sixth angle with respect to the X axis, the Y axis, and the Z axis, respectively, starting from the point "a" on the Y axis. The third image capturing line of the third image capturing unit may form a third' angle with respect to the X-Z plane and may have a seventh angle, an eighth angle, and a ninth angle with respect to the X axis, the Y axis, and the Z axis, respectively, starting from the point "b" on the Y axis.

That is, in the omnidirectional image processing apparatus according to an exemplary embodiment of the present inventive concept, the image capturing lines of a plurality of image capturing units may be positioned at different points on the Y axis and may have different angles with respect to the ground (or the X-Z plane) unlike in an image processing apparatus where the image capturing lines of a plurality of image capturing units have the same angle with respect to the ground at a given point on the Y axis.

According to an embodiment of the present invention, there is disclosed a method in which a user who wears the omnidirectional image processing apparatus on his/her neck as a wearable device provides a user signal (e.g., a finger gesture, a voice signal, etc.) and the omnidirectional image processing apparatus recognizes the user signal and controls the capturing of the omnidirectional image

The recognition and processing of the user signal may be performed by the omnidirectional image processing apparatus or by a separate external device that receives information regarding the user signal from the omnidirectional image processing apparatus and processes the received information. An apparatus for recognizing and processing a user signal may be referred to as an "image processing apparatus." The image processing apparatus may include an omnidirectional image processing apparatus and/or an external device.

The image processing apparatus configured to process a user signal in an image may include a communication unit for communicating with an external device and a processor operatively connected to the communication unit. The processor may recognize and process a user signal, which will be described hereinbelow.

Also, for convenience of description, a method of an omnidirectional image processing apparatus recognizing and processing a user signal will be disclosed in an embodiment of the present invention, but the present invention may also be applied to a method of recognizing and processing a user signal in a general image other than an omnidirectional image. This embodiment is also encompassed in the scope of the present invention.

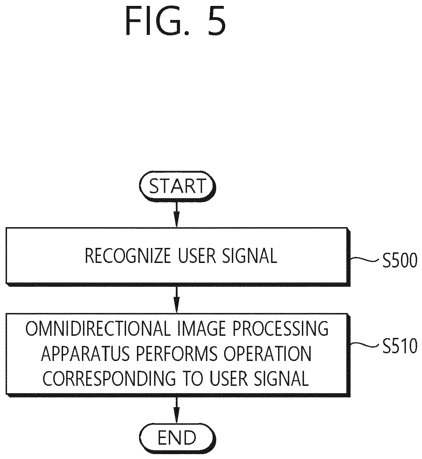

FIG. 5 is a conceptual view showing an imaging method according to an embodiment of the present invention.

A method of an omnidirectional image processing apparatus recognizing a user signal and performing an operation according to the user signal is disclosed in FIG. 5.

Referring to FIG. 5, the omnidirectional image processing apparatus may recognize a user signal (S500).

When the user signal is an image signal included in a captured omnidirectional image, whether the user signal is included in the omnidirectional image may be checked. Alternatively, when the user signal is a voice signal, whether the user signal is included in an input voice signal may be checked. The user signal may be previously defined or may be defined based on a user's settings or based on the training of the omnidirectional image processing apparatus.

The omnidirectional image processing apparatus may check whether the user signal is included in an omnidirectional image (or the input signal) in order to recognize the user signal.

For example, when the user signal is a user's hand signal, the omnidirectional image processing apparatus may determine whether an image of the user's hand is present in an omnidirectional image. When the image of the user's hand is present in the omnidirectional image, the hand image may be recognized. In this case, only a hand image having an imaging distance (a distance between an imaging unit and an object) less than or equal to a critical distance in an omnidirectional image may be recognized as a user signal. Alternatively, whether the hand image is that of the user's hand is determined on the basis of stored features of the user's hand, and the hand image may be recognized as a user signal only when the hand image is that of the user's hand.

When the user signal is the user's voice signal, the omnidirectional image processing apparatus may determine whether the user's voice signal is present in an input sound signal. When the user's voice signal is present in the sound signal, the user's voice signal may be recognized.

For control of the omnidirectional image processing apparatus based on the user signal, a reference user signal matched with a control operation of the omnidirectional image processing apparatus may be defined. A similarity between the user signal and the reference user signal matched with the control operation of the omnidirectional image processing apparatus may be determined. Only when the similarity between the recognized user signal and the reference user signal is greater than or equal to a critical percentage may the control operation of the omnidirectional image processing apparatus according to the user signal be performed.

For example, a similarity between an image of the reference user signal and an image of the user signal may be determined. Through the determination of the similarity between feature points of the image of the reference user signal and the feature points of the image of the user signal, when the similarity between the image of the reference user signal and the image of the user signal to be determined is greater than or equal to a critical percentage, the user signal may be recognized as corresponding to the reference user signal.

Alternatively, according to an embodiment of the present invention, a sensor capable of sensing an object located within a critical distance from the location of the omnidirectional image processing apparatus may be implemented in the omnidirectional image processing apparatus. When the sensor senses an object located within the critical distance, the omnidirectional image processing apparatus may switch from a power save mode to an active mode and then receive a user signal. For example, when a user wearing the omnidirectional image processing apparatus stretches his/her hand, the omnidirectional image processing apparatus may recognize the hand and then switch the power save mode to the active mode. The imaging unit may be driven in the active mode to capture an image on the user's hand.

The omnidirectional image processing apparatus may perform a control operation corresponding to the recognized user signal (S510).

The omnidirectional image processing apparatus may determine which user signal among a plurality of defined user signals corresponds to the current hand shape and may perform an operation corresponding to the determined user signal. For example, when the user signal is a quadrangular shape formed with the user's hand, the user signal may be matched with an operation of the omnidirectional image processing apparatus, which is for tracking and imaging a central object in the quadrangular shape.

In detail, when the user signal is recognized as corresponding to the reference user signal, an operation of the omnidirectional image processing apparatus corresponding to the reference user signal image may be performed.

In other words, the image processing apparatus may recognize a user signal among the plurality of defined user signals, and the image processing apparatus may control the omnidirectional image processing apparatus according to a control signal corresponding to the user signal. The plurality of user signals may correspond to a plurality of different hand images.

The user signal may correspond to one hand image matched with a hand image to be recognized among the plurality of different hand images, and the hand image to be recognized may be included in an omnidirectional image captured by the omnidirectional image processing apparatus.

The hand image to be recognized may be a hand image specifying an object in the omnidirectional image, and a control signal corresponding to the hand image to be recognized may indicate to track and image the object or to capture a still image of the object.

Alternatively, the hand image to be recognized may be a hand image defined to stop or restart the capturing in the omnidirectional image, and a control signal corresponding to the hand image to be recognized may indicate to stop or restart the capturing of the omnidirectional image.

Alternatively, the hand image to be recognized may be a hand image defined to change an imaging angle of view of the omnidirectional image, and a control signal corresponding to the hand image to be recognized may control the imaging angle of view.

Alternatively, the hand image to be recognized may be an image for cropping a certain region in the omnidirectional image, and a control signal corresponding to the hand image to be recognized may indicate to track and capture the object or to capture a still image of the object. In this case, the hand image to be recognized may indicate a cropping location (in a horizontal direction/vertical direction) in the omnidirectional image through a finger, and the certain region in the omnidirectional image may be cropped on the basis of the indicated cropping location. For example, a horizontal region and a vertical region on which image cropping is to be performed may be indicated using the right-hand thumb and index finger on a first side, and a horizontal region and a vertical region on which image cropping is to be performed may be indicated using the left-hand thumb and index finger on a second side. The kinds of finger may be freely set.

The right-hand index finger indicates a first horizontal axis, the left-hand index finger indicates a second horizontal axis, the left-hand thumb indicates a first vertical axis, and the right-hand thumb indicates a second vertical axis, and an image in a quadrange formed by the four axes (or extension lines of the axes) may be cropped in the omnidirectional image. The size of the region to be cropped may be adjusted by enlarging or reducing the horizontal region and the vertical region without needing to touch the right-hand finger and the left-hand finger.

That is, a control signal corresponding to a hand image that is obtained by capturing the user's hand and that will be recognized may be generated, and a specific image in the omnidirectional image may be cropped. The hand image (or the direction of the finger) may be analyzed, and an image region to be cropped may be determined through the analysis of the direction of the finger.

Such a cropping method for the images is one example. Depending on the user's settings, the hand shapes of various users may be recognized, and then image cropping may be performed. Specific user signals and operations of the omnidirectional image processing apparatus corresponding to the user signals will be disclosed below.

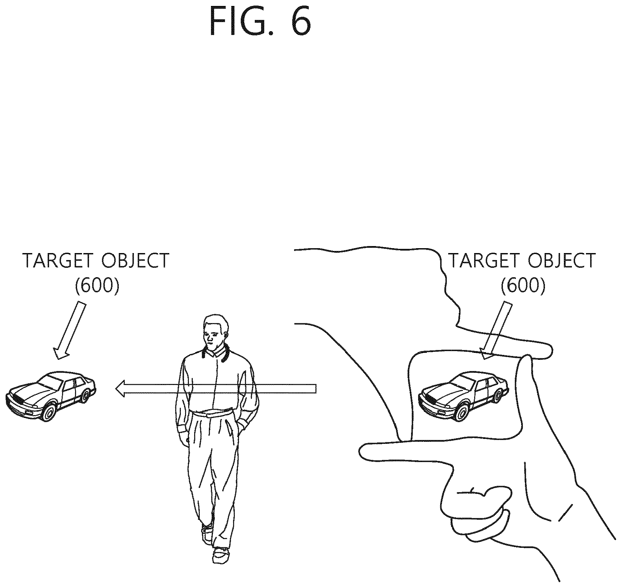

FIG. 6 is a conceptual view showing an imaging method according to an embodiment of the present invention.

A user signal recognition-based imaging method is disclosed in FIG. 6.

Referring to FIG. 6, the omnidirectional image processing apparatus may recognize a user signal (e.g., a specific gesture) of a user who wears the omnidirectional image processing apparatus and may capture an omnidirectional image.

For example, the user may designate a region to be imaged by using his/her hand. A user gesture to be disclosed is one example, and various gestures other than the user gesture to be disclosed may be used.

The user may create a quadrangular shape in a space using the thumbs and index fingers of both hands and indicate a specific object (hereinafter referred to as a target object 600) to be imaged depending on imaging settings other than default imaging settings. The default imaging settings may be basic settings for omnidirectional imaging of the omnidirectional imaging apparatus.

For example, the omnidirectional image processing apparatus may recognize a quadrangular shape formed based on both hands in a captured image and performs object imaging, focusing on the target object 600 located in a central region of the recognized quadrangular shape. Also, the omnidirectional image processing apparatus may recognize a quadrangular shape formed based on both hands in a captured image and precisely perform object imaging, focusing on the target object 600 located in a central region of the recognized quadrangular shape. The degree of zooming may be determined depending on whether the quadrangular shape moves forward or backward. Alternatively, the omnidirectional image processing apparatus may capture a still image of the quadrangular shape formed based on both hands and also provide still image information.

That is, the omnidirectional image processing apparatus may provide a captured omnidirectional image through a separate image setting for the target object 600 or may separately generate image information including the target object 600 and provide the image information to the user.

The omnidirectional image processing apparatus may perform imaging through tracking of a target object. The indicated object may be moved, or the omnidirectional image processing apparatus may be moved. The omnidirectional image processing apparatus may track the target object 600 and capture the target object 600 according to the separate imaging setting.

Also, according to an embodiment of the present invention, the user may indicate a plurality of target objects 600 through a user signal. When the plurality of target objects 600 are indicated based on the user signal, the plurality of target objects 600 may be imaged based on separate imaging settings.

When it is desired to stop imaging the target object 600, the user may generate a user signal indicating to stop imaging the target object 600 (e.g., a target object imaging stop signal), and the omnidirectional image processing apparatus may recognize the user signal and stop imaging the target object 600, switch the image settings to default imaging settings, and then perform the imaging.

Also, according to an embodiment of the present invention, it is possible to indicate to stop capturing an omnidirectional image and indicate to restart capturing an omnidirectional image on the basis of the user signal.

In detail, a user signal for indicating to stop capturing the omnidirectional image (an imaging stop signal) may be generated. When the imaging stop signal is generated by the omnidirectional image processing apparatus, the operation of capturing the omnidirectional image may be stopped.

Alternatively, a user signal for indicating to restart capturing the omnidirectional image (an imaging restart signal) may be generated. When the imaging restart signal is generated by the omnidirectional image processing apparatus, the operation of capturing the omnidirectional image may be re-performed.

The user may prevent unnecessary imaging through the imaging stop signal and the imaging restart signal.

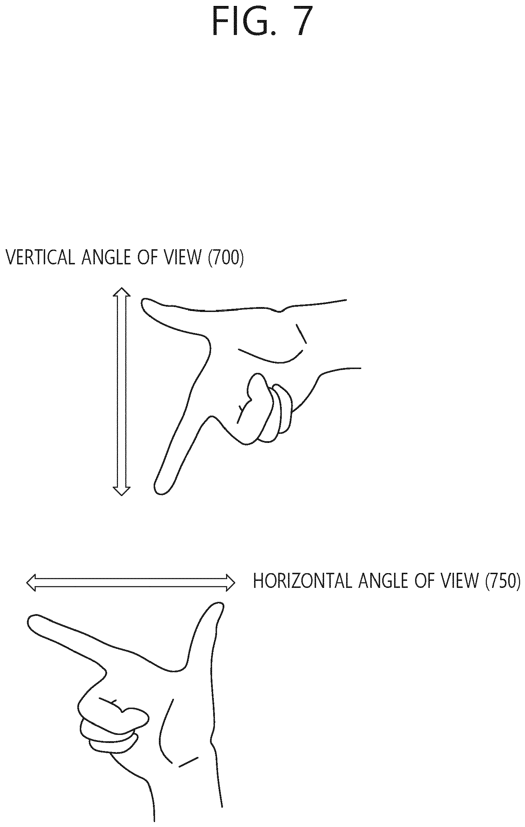

FIG. 7 is a conceptual view showing an imaging method according to an embodiment of the present invention.

A user signal recognition-based imaging method is disclosed in FIG. 7.

Referring to FIG. 7, the omnidirectional image processing apparatus may recognize a user signal (e.g., a specific gesture) of a user who wears the omnidirectional image processing apparatus and may capture an omnidirectional image.

The user may adjust the angle of view of the omnidirectional image with his/her hands. For example, the omnidirectional image processing apparatus may perform imaging within a vertical angle of view 700 required by the user on the basis of the adjustment of the vertical angle of view 700.

In detail, the user may adjust the vertical angle of view 700 of the omnidirectional image through an operation of vertically spreading both arms at a certain angle, an operation of vertically stretching a thumb and an index finger at a certain angle, an operation of drawing a circle with a finger in a certain direction, or the like. For example, the imaging angle of view may increase as the angle between the thumb and the index finger increases and may decrease as the angle between the thumb and the index finger decreases.

For example, when it is desired to image only a region corresponding to 90 degrees vertically, an operation of vertically stretching a thumb and an index finger at a certain angle or an operation of drawing only a quarter of a circle may be performed as a user signal. The omnidirectional image processing apparatus may recognize such a user operation as a user signal for adjusting the vertical angle of view 700, and the vertical angle of view 700 of the image captured by the omnidirectional imaging apparatus may be adjusted.

Also, according to an embodiment of the present invention, the omnidirectional image processing apparatus may only perform imaging within a horizontal angle of view 750 required by the user based on the adjustment of the horizontal angle of view 750. When a first imaging unit, a second imaging unit, and a third imaging unit perform imaging on the basis of a first angle of view, a second angle of view, and a third angle of view, the user may adjust the horizontal angle of view 750 of the omnidirectional image through an operation of horizontally spreading both arms at a certain angle or an operation of horizontally stretching a thumb and an index finger at a certain angle. Alternatively, the horizontal angle of view 750 of the omnidirectional image may be adjusted through an operation of drawing a portion of a circle with a finger.

For example, when it is desired to image only a region corresponding to 180 degrees horizontally, an operation of horizontally stretching a thumb and an index finger at a certain angle or an operation of drawing half of a circle may be performed as a user signal. The omnidirectional image processing apparatus may recognize such a user operation as a user signal for adjusting the horizontal angle of view 750, adjust the horizontal angle of view 750 of the image captured by the omnidirectional image processing apparatus, and perform horizontal imaging. In this case, among the plurality of imaging units included in the omnidirectional image processing apparatus, only some imaging units may operate. For example, among the first imaging unit, the second imaging unit, and the third imaging unit, only the first imaging unit and the second imaging unit may operate to perform imaging.

Also, according to an embodiment of the present invention, different vertical angles of view 700 may be set depending on the horizontal angle of view 750. For example, the vertical angle of view for an image captured by the first imaging unit is "a" degrees, the vertical angle of view for an image captured by the second imaging unit is "b" degrees, and the vertical angle of view for an image captured by the third imaging unit is "c" degrees such that different vertical angles of view may be set depending on the horizontal angle of view.

Also, according to an embodiment of the present invention, the user may adjust the quality of the omnidirectional image using his/her hands. For example, the user may adjust the quality of the omnidirectional image in order to generate a high-quality omnidirectional image. For example, the user may generate a high-quality omnidirectional image generation signal for generating a high-quality omnidirectional image on the basis of a user signal. On the contrary, the user may generate a low-quality omnidirectional image generation signal for generating a low-quality omnidirectional image as a user signal.

The omnidirectional image processing apparatus may recognize the high-quality omnidirectional image generation signal and the low-quality omnidirectional image generation signal and adjust the quality of the omnidirectional image.

The user signals disclosed in FIGS. 6 and 7 are just examples, and a variety of different user signals may be used to control the omnidirectional image processing apparatus.

Also, FIGS. 6 and 7 assume that the user signal is a user's hand signal, but another format of user signal such as a voice signal may also be used to control the omnidirectional image processing apparatus.

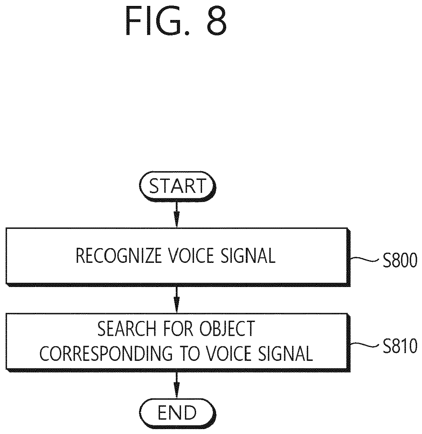

FIG. 8 is a conceptual view showing an imaging method according to an embodiment of the present invention.

A user signal recognition-based imaging method is disclosed in FIG. 8. In particular, FIG. 8 assumes that the user signal is a voice signal.

Referring to FIG. 8, a voice signal may be recognized (S800).

A user may generate the voice signal to control an omnidirectional image processing apparatus. The user may transfer information regarding an object to be imaged to the omnidirectional image processing apparatus as voice information. For example, when it is desired to image a bicycle rider as a target object, the user may generate a voice signal "image bicycle." A voice generated by the user may be transferred to the omnidirectional image processing apparatus.

An omnidirectional image may be searched for an object corresponding to the voice signal (S810).

When the user generates the voice signal "image bicycle," the omnidirectional image processing apparatus may search a captured omnidirectional image for a bicycle on the basis of information regarding the voice signal. Bicycle template image information may be acquired, and an object having high similarity with the bicycle template image information may be found as a bicycle in the omnidirectional image. When the bicycle is found in the omnidirectional image, the found bicycle may be set as a target object, and imaging may be performed on the target object.

When a plurality of bicycles are found in the omnidirectional image or when a bicycle is difficult to find, the omnidirectional image processing apparatus may request additional information for the target object. The omnidirectional image processing apparatus may inform the user that the target object is not specified on the basis of a sound signal, a text signal, a vibration signal, and the like and may request additional information for specifying the target object.

For example, the user may provide additional voice information such as the direction, color, and the like of the bicycle as voice information in order to specify a specific bicycle as the target object. When the target object is not specified based on a user signal, a target object in the omnidirectional image may be specified on the basis of the additional voice information.

As described above, the user may specify a plurality of target objects on the basis of the voice information and may perform imaging on the plurality of target objects on the basis of imaging settings different from the default imaging settings.

The omnidirectional image processing apparatus may separate an object from a background in the omnidirectional image, acquire information regarding the name of the object by performing image-based learning on the object, and specify a target object on the basis of the user's voice information. The voice-based recognition for the object may be performed not by the omnidirectional image processing apparatus itself but by an image processing server associated with the omnidirectional image processing apparatus.

Likewise, the adjustment of the horizontal angle of view, the adjustment of the vertical angle of view, the stop or restart of the imaging of the omnidirectional image, and the like may be performed on the basis of the voice signal. A voice signal matched with the control operation may be performed, and the omnidirectional image processing apparatus may be controlled through a comparison between the defined voice signal and an input voice signal.

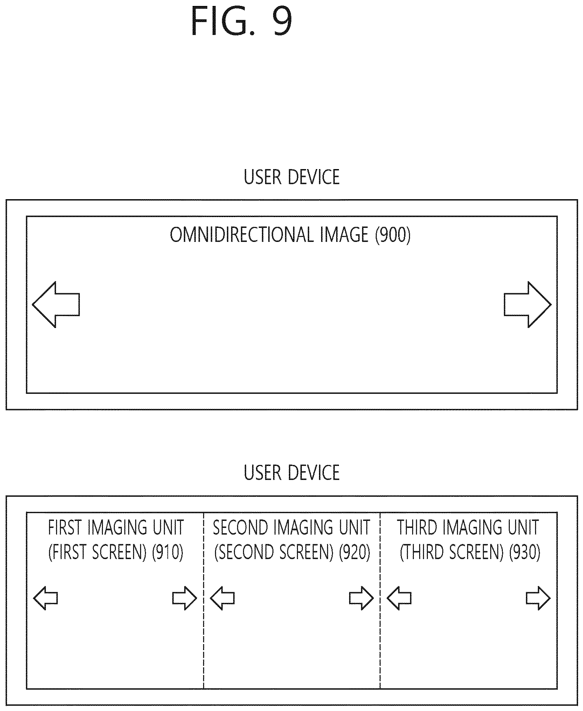

FIG. 9 is a conceptual view showing a method for checking an omnidirectional image according to an embodiment of the present invention.

A method of checking an omnidirectional image captured by a user and a change in the omnidirectional image according to a user signal in real time is disclosed in FIG. 9.

Referring to FIG. 9, information regarding an omnidirectional image captured by an omnidirectional image processing apparatus may be transmitted to a user device. The user device may be a device of a user such as a smartphone.

Referring to an upper portion of FIG. 9, the user device may receive the omnidirectional image information and output a currently captured omnidirectional image 900 through a display of the user device. Image information regarding a specific horizontal angle of view may be output to a screen of the user device, and an omnidirectional image 900 may be provided by rotating 360 degrees according to an input signal input by the user. The user's input signal may be a touch signal for turning the screen sideways. Alternatively, the omnidirectional image 900 that has been output to the user device may be switched and provided according to the rotation of the user device.

Referring to a lower portion of FIG. 9, the display screen of the user device may be divided into a first screen 910 for the first imaging unit, a second screen 920 for the second imaging unit, and a third screen 930 for the third imaging unit. Image information may be provided while the first screen 910, the second screen 920, and the third screen 930 are rotated according to an input signal input by the user. For example, a touch signal which turns sideways may be input to the first screen 910, and the first screen 910 may be switched according to the input touch signal.

As described above, the user may control the operation of the omnidirectional image processing apparatus on the basis of the user signal and also a omnidirectional image being captured may be changed according to the controlled operation of the omnidirectional image processing apparatus. The user may check whether imaging is performed according to the user signal through the user device.

For example, when the user performs an operation of indicating a target object to generate a user signal, the omnidirectional image processing apparatus may perform imaging on the target object according to settings different from the default imaging settings.

The user device may indicate a target object by outputting an identification image for identifying the target object indicated by the user, and the user may check the target object indicated through the display of the user device. Also, the imaging screen changed according to the indication of the target object based on the user signal may be provided through the display of the user device. Through such a method, the user may directly check whether imaging is performed on the target object indicated by the user on the basis of the user signal.

As another example, when the user generates a user signal for changing a horizontal angle of view or a vertical angle of view, the omnidirectional image processing apparatus may change the horizontal angle of view or the vertical angle of view and then capture an omnidirectional image. The user device may transfer information regarding the changed horizontal angle of view or vertical angle of view to the user through the display of the user device. An omnidirectional image captured according to the changed horizontal angle of view or vertical angle of view is transferred to the user device such that the user may check the omnidirectional image captured according to the changed horizontal angle of view or vertical angle of view.

In this way, the user may check whether the user signal is recognized through the display of the user device and may receive omnidirectional image information changed according to the user signal.

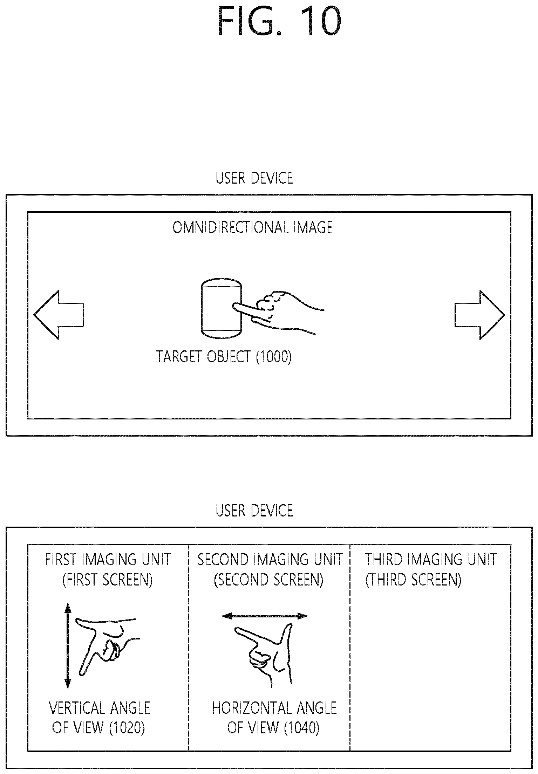

FIG. 10 is a conceptual view showing control of the omnidirectional image processing apparatus based on a user device according to an embodiment of the present invention.

A method for transferring control information generated by the user device in reverse to the omnidirectional image processing apparatus is disclosed in FIG. 10.

Referring to FIG. 10, an application for controlling the omnidirectional image processing apparatus may be installed in the user device, and a user may control the omnidirectional image processing device through the user device.

As described above, the user device may receive omnidirectional image information and may output information regarding a currently captured omnidirectional image through a display of the user device. Image information regarding a specific horizontal angle of view may be output to a screen of the user device and may be provided by rotating 360 degrees according to an input signal input by the user. Alternatively, the display screen of the user device may be divided into a first screen for a first imaging unit, a second screen for a second imaging unit, and a third screen for a third imaging unit. Image information may be provided while the first screen, the second screen, and the third screen are rotated according to an input signal input by the user.

The user may input a user signal through the user device.

For example, the user may indicate a target object 1000 through the screen of the user device on the basis of touch, and information regarding the target object 1000 indicated by the user device may be transferred to the omnidirectional image processing apparatus. The omnidirectional image processing apparatus may track and image the target object 1000 indicated by the user device. When the user indicates the target object 1000 on the basis of touch, an additional image indicating the target object 1000 (e.g., an arrow indicating the target object 1000) may be generated, and whether the target object 1000 is accurately indicated may be checked through the additional image.

As another example, the user may adjust a horizontal angle of view 1040 and a vertical angle of view 1020 through the screen of the user device. The screen of the user device may be divided into a plurality of screens to provide image information captured by each imaging unit to the user. The user may adjust the horizontal angle of view 1040 through an operation of horizontally stretching or pinching two fingers on the plurality of screens and may adjust the vertical angle of view 1020 through an operation of vertically stretching or pinching two fingers on the plurality of screens.

Through the operation of stretching or pinching two fingers, information regarding the horizontal angle of view 1040 and information regarding the vertical angle of view 1020 may be provided to the screen of the user device. For example, a numerical value for the horizontal angle of view 1040 and a numerical value for the vertical angle of view 1020 may be output to the screen of the user device.

A signal input through the user device may be transferred to the omnidirectional image processing apparatus, and the omnidirectional image processing apparatus may control the horizontal angle of view 1040 and the vertical angle of view 1020 according to the signal received from the user device.

This method is just one example, and the operation of the omnidirectional image processing apparatus may be controlled in various ways based on a user signal generated through the user device.

According to the present invention, it is possible to provide a user signal to an image processing apparatus and more conveniently control the image processing apparatus according to the user signal.

Also, according to the present invention, it is possible to check a captured omnidirectional image through a user device in real time and conveniently control the capturing of the omnidirectional image.

The above-described embodiments of the present invention may be implemented in the form of program instructions executable by various computer elements and recorded in a computer-readable recording medium. The computer-readable recording medium may include program instructions, data files, data structures, etc. alone or in combination. The program instructions recorded on the computer-readable recording medium may be specially designed and configured for the present invention or known to and used by those of ordinary skill in the computer software field. Examples of the computer-readable recording medium include magnetic media, such as a hard disk, a floppy disk, and magnetic tape, optical media, such as a compact disc read-only memory (CD-ROM) and a digital versatile disc (DVD), magneto-optical media, such as a floptical disk, and hardware devices, such as a ROM, a random access memory (RAM), and a flash memory, specially configured to store and perform program instructions. Examples of the program instructions include not only machine language code produced by a compiler but also high-level language code that can be executed by a computer through an interpreter or the like. To perform the operations of the present invention, the hardware devices may be configured as one or more software modules, and vice versa.

While the present invention has been described above with reference to specific details, such as detailed elements, by way of limited embodiments and drawings, these are provided merely to aid the overall understanding of the present invention. The present invention is not limited to the embodiments, and various modifications and changes can be made thereto by those of ordinary skill in the technical field to which the present invention pertains.

Therefore, the spirit of the present invention should not be limited to the above-described embodiments, and the scope of the present invention should be regarded as encompassing not only the following claims but also their equivalents and variations.

## Claims

1. A method of processing a user signal, which is performed by an image processing device, the method comprising:
recognizing a user signal among a plurality of defined user signals; and
controlling an omnidirectional image processing apparatus according to a control signal corresponding to the user signal,
wherein each of the plurality of user signals correspond to a corresponding one of a plurality of different hand images.

2. The method of claim 1, wherein,
the user signal corresponds to one hand image matched with a hand image to be recognized among the plurality of different hand images, and
the hand image to be recognized is included in an omnidirectional image captured by the omnidirectional image processing apparatus.

3. The method of claim 2, wherein,
the hand image to be recognized is a hand image for specifying an object in the omnidirectional image, and
a control signal corresponding to the hand image to be recognized indicates to track and image the object or to capture a still image of the object.

4. The method of claim 2, wherein,
the hand image to be recognized is a hand image in the omnidirectional image that is defined to stop or restart the capturing, and
a control signal corresponding to the hand image to be recognized indicates to stop or restart the capturing of the omnidirectional image.

5. The method of claim 2, wherein,
the hand image to be recognized is a hand image defined as changing an imaging angle of view of the omnidirectional image, and
a control signal corresponding to the hand image to be recognized controls the imaging angle of view.

6. An image processing apparatus for processing a user signal, the image processing apparatus comprising:
a communication unit configured to communicate with an external device; and
a processor operatively connected to the communication unit,
wherein,
the processor is implemented to recognize a user signal among a plurality of defined user signals and control an omnidirectional image processing apparatus according to a control signal corresponding to the user signal, and
each of the plurality of user signals correspond to a corresponding one of a plurality of different hand images.

7. The image processing apparatus of claim 6, wherein,
the user signal corresponds to one hand image matched with a hand image to be recognized among the plurality of different hand images, and
the hand image to be recognized is included in an omnidirectional image captured by the omnidirectional image processing apparatus.

8. The image processing apparatus of claim 7, wherein,
the hand image to be recognized is a hand image which specifies an object in the omnidirectional image, and
a control signal corresponding to the hand image to be recognized indicates to track and image the object or to capture a still image of the object.

9. The image processing apparatus of claim 7, wherein,
the hand image to be recognized is a hand image in the omnidirectional image that is defined to stop or restart the capturing, and
a control signal corresponding to the hand image to be recognized indicates to stop or restart the capturing of the omnidirectional image.

10. The image processing apparatus of claim 7, wherein,
the hand image to be recognized is a hand image defined as changing an imaging angle of view of the omnidirectional image, and
a control signal corresponding to the hand image to be recognized controls the imaging angle of view.

11. A computer-readable recording medium having a computer program recorded thereon for executing the method of any one of claims 1 to 5.
